# NEUE EUROPÄISCHE PATENTSCHRIFT

(11) **EP 1 378 588 B2**
(45) Veröffentlichungstag und Bekanntmachung des Hinweises auf die Entscheidung über den Einspruch: **24.12.2008**
(45) Hinweis auf die Patenterteilung: 28.12.2005
(21) Anmeldenummer: 03014814.2
(22) Anmeldetag: 30.06.2003
(51) Int. Cl.: C23C 30/00

(54) **Mähscheibe für Scheibenmähwerke**
Cutting disc for disc cutter bars
Disque de coupe pour barres de coupe à disque

(30) Priorität: 02.07.2002 DE 10229736
(43) Veröffentlichungstag der Anmeldung: 07.01.2004
(73) Patentinhaber: CLAAS Saulgau GmbH, 88348 Bad Saulgau (DE)
(72) Erfinder: Gernet, Siegfried, 88339 Bad Waldsee-Mittelurbach (DE); Rauch, Hans, 88348 Bad Saulgau (DE)
(74) Vertreter: Eisele, Otten, Roth & Dobler

(56) Entgegenhaltungen:
- EP-A- 0 887 006
- US-A- 4 923 511
- US-A- 5 845 468
- US-A- 5 879 743
- US-A- 6 067 784
- FA. VICON: 'DMP 2400-2800-3200 -VICON Scheibenmäher'

## Beschreibung

Die Erfindung betrifft Mähscheiben von Scheibenmähwerken nach dem Oberbegriff des Anspruchs 1.

US-A-5 845 468 Veröffentlich eine Mähscheibe gemäss dem Oberbegriff des Anspruchs 1.

Die Mähklingen von Scheibenmähwerken sind in bekannter weise an um überwiegend lotrechte Achsen umlaufend angetriebener Mähscheiben schwenkbar um die Achsen von Bolzen einer Messerhalterung befestigt. Aufgrund der Zentrifugalkräfte nehmen die Mähklingen während des Mähens eine überwiegend radial nach außen gerichtete Lage ein, welche ihnen eine hinreichende Steifigkeit zur Aufbringung und Abstützung der Schnittkräfte an den Mähklingen während des Mähens verleiht. Dabei sind die Mähscheiben für Scheibenmähwerke einer hohen Drehzahl ausgesetzt, die vorgegeben wird durch die erforderliche Umfangsgeschwindigkeit der Mähklingen.

Die Mähklingen eines Scheibenmähers sind dabei in den Bolzen der Messerhalterung der Mähscheiben eingehängt, die Teil des Widerlagers der Mähscheiben darstellen, an dem sich die Reaktionskraft der Messerklingen verursachenden Zentrifugalkraft als Zentripetalkraft abstützt.

Deshalb müssen sämtliche von den Mähklingen und deren Halterung einer Mähscheibe verursachten Zentripetalkräfte als innere Kräfte von einer Mähscheibe aufgenommen und möglichst verschleißarm ertragen werden. Diese inneren Kräfte manifestieren sich überwiegend durch Radial- und Tangentialspannungen, und teilweise auch durch Biegespannungen, die von dem Werkstoff einer Mähscheibe sicher aufgenommen werden müssen. Somit handelt es sich bei einer Mähscheibe um ein hochdynamisch belastetes Bauteil, an dessen physikalischen Eigenschaften hinsichtlich der Belastbarkeit hohe Anforderungen gestellt werden.

Daher ist es von besonderer Bedeutung für die Betriebssicherheit von Mähscheiben, dass diese aus einem duktilen Werkstoff bestehen, so dass innere Spannungsspitzen durch elastische Verformungen ausgeglichen werden können. Besonders nachteilig können sich dabei Unregelmäßigkeiten im Gefüge der Werkstoffstruktur von Mähscheiben auswirken, die bekanntermaßen zu Spannungskonzentrationen führen können, die hohe lokale Spannungsspitzen hervorrufen können, und die unter Umständen zum Versagen eine Bauteils dieser Art führen können.

Je nach Einsatzverhältnissen können Mähscheiben einem besonders hohen Verschleiß ausgesetzt sein. Dieses gilt insbesondere dann, wenn die Mähscheiben abrasiven Medien, wie diese beispielsweise besonders harte Sandkörner darstellen, ausgesetzt sind.

Diese wiederum können eine schmirgelnde und somit abrasive Wirkung mit hohem Materialabtragungseffekt an den Mähscheiben erzeugen, wodurch das Material einer Mähscheibe insbesondere im vorlaufenden Luv-Bereich einer Mähscheibe einem erheblichen und vorzeitigen Verschleiß ausgesetzt sein kann.

Die Folge kann dann auch sein, dass die Wandstärke einer Mähscheibe an diesen kritischen Stellen vorzeitig reduziert wird, welches den Spannungsfluss und die innere Spannungsverteilung, hervorgerufen durch die oben erwähnten Zentrifugal- bzw. Zentripetalkräfte, ungünstig beeinflussen kann.

Bekannt ist, um derartigen Verschleiß in unmittelbarer Nähe der Messerhalterung durch Aufpanzerung zu mindern und somit entgegenzuwirken, diese Bereiche im Sinne einer Standzeitverlängerung durch eine Auftragsschweißung zu verbessern. Diese Auftragsschweißung kommt dabei einer Verstärkung der unmittelbaren Umgebung einer Messerhalterung durch massiven Materialauftrag gleich.

Bei einer Auftragsschweißung ist ein erheblicher Wärmeeintrag unvermeidlich, der, je großflächiger der Wärmeeintrag ist, mit einem erheblichen Verzug des Grundkörpers einer Mähscheibe gekoppelt sein kann, und der in jedem Fall unerwünscht ist.

Die Aufpanzerung durch eine Auftragsschweißung erzeugt dabei auch häufig die mit der Schweißtechnologie einhergehende Kerbenbildung, beispielsweise im Übergangsbereich, von Schweißraupe zu Schweißraupe, und möglicherweise auch im Übergangsbereich einer Schweißraupe zum Grundwerkstoff. Hinzu kommen die sogenannten technologische Kerben durch Grobkornbildung in der Wärmeeinflusszone einer Schweißraupe, die ebenfalls unerwünscht, jedoch unvermeidlich sind.

Das Auftragen von Auftragsschweißungen führt technologisch bedingt zwangsläufig zu Unwuchten an den Mähscheiben. Diese Unwuchten müssen kompensiert werden durch das Anbringen einer Ausgleichsmasse als Kontergewicht. Dazu werden die Mähscheiben auf Unwuchtmessmaschinen dynamisch ausgewuchtet, indem beispielsweise das Kontergewicht an der entsprechenden Stelle aufgeschweißt wird. Auch das Aufschweißen von Kontergewichten ist ebenfalls mit der Entstehung von technologischen Kerben verbunden, die tendenziell technologische Unwägbarkeiten in sich bergen.

Diese technologischen Unwägbarkeiten zu vermeiden ist Gegenstand der erfinderischen Überlegungen.

Aufgabe der Erfindung ist es, durch geeignete technologische Maßnahmen einerseits die Widerstandsfähigkeit gegen abrasiven Verschleiß zur Aufrecherhaltung der Formstabilität einer Mähscheibe und andererseits daran gekoppelt, die Betriebssicherheit des Bauteils Mähscheibe zu erhöhen.

Gelöst wird die Aufgabe der Erfindung mit den kennzeichnenden Merkmalen von Anspruch 1. Weitere vorteilhafte Ausgestaltungen der Erfindung sind den abhängigen Ansprüchen, der Beschreibung und den Figurendarstellungen zu entnehmen.
Erfindungsgemäß werden die Mähscheiben insbesondere in den Bereichen, die einem besonders hohen Verschleiß durch abrasive Medien ausgesetzt sind, mit einem dünnen und gleichmäßig aufgebrachten verschleißmindernden Überzug belegt. Infrage dazu kommen beispielsweise Überzüge, die durch Flammspritzen gleichmäßig und in dünner Beschichtung aufgebracht werden. Eine derartige Beschichtungsdicke kann wenige 1/10 mm betragen und eben entsprechend gleichmäßig aufgetragen werden.

Der besondere Vorteil der Erfindung besteht darin, dass ein derartiger verschleißmindernder Überzug nicht daran gebunden ist, den Grundwerkstoff aufzuschmelzen und somit die technologischen Kerben im Bereich von Wärmeübergangszonen, die schweißtechnologisch unvermeidbar sind, zu vermeiden. Durch die gleichmäßige Auftragung in Verbindung mit einer geringen Schichtdicke des Überzugs ist der Massenanteil des Überzugs vergleichsweise gering in Bezug auf eine Auftragsschweißung, so dass, wenn überhaupt, dadurch geringe Unwuchten entstehen. Durch die Einbindung von sehr harten und verschleißmindernden Werkstoffanteilen, beispielsweise in Form von Karbiden, Oxyden, Nitriden, Nitiden, die in der metallische Bindungsmatrix des aufgespritzten Werkstoffs enthalten sind, lassen sich hochverschleißfeste Überzüge auch auf partielle Regionen der Oberfläche einer Mähscheibe gezielt aufbringen. Die Summe dieser Vorteile trägt somit zu einer erheblichen Verbesserung der Standzeit und zu einer Verbesserung der Betriebssicherheit einer Mähscheibe bei. Das Erste trägt zur Verbesserung der Wirtschaftlichkeit und das Zweite zur Verbesserung der,Betriebssicherheit eines Mähwerks bei.

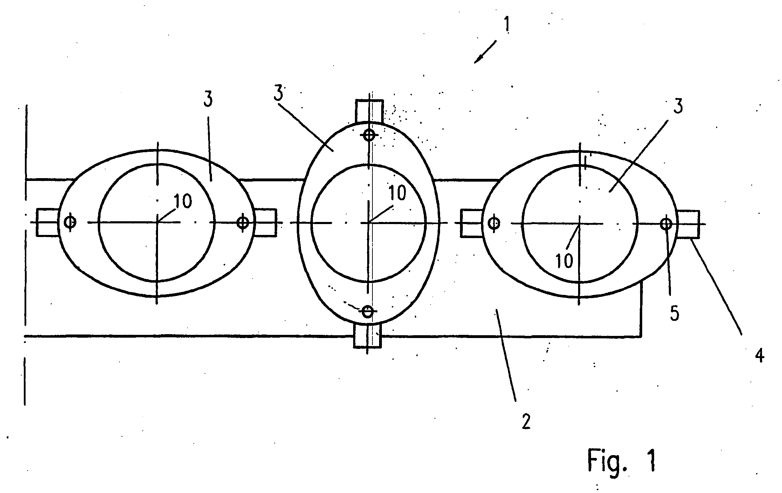

Fig.1 zeigt einen Teilbereich eines Mähbalkens eines Scheibenmähwerks 1 mit drei Mähscheiben 3 in bekannter Ausführung in einer Draufsicht. Die Mähscheiben 3 sind um lotrechte Achsen 10 angetrieben und in nicht näher dargestellten Lagern eines Getriebegehäuses 2 gelagert. Die Mähklingen 4 einer Mähscheibe 3 sind an Bolzen 5 einer Messerhalterung in bekannter weise schwenkbar befestigt.
In Fig. 2 ist eine einzelne Mähscheibe 3 nach der Erfindung in einer Draufsicht vergrößert dargestellt.

An der Mähscheibe 3 ist der Bereich etwa rund um den Bolzen 5 einer Messerhalterung, in an sich bekannter Weise durch eine Auftragsschweißung 7, durch eine Kreuzschraffur gekennzeichnet.

Erfindungsgemäß werden die der Messerhalterung ferner gelegeneren Bereiche 8 durch einen verschleißmindernden Überzug 11, vorzugsweise mittels eines thermischen Spritzverfahrens aufgebracht, geschützt. Der Überzug 11 kann beispielsweise aus einem metallischen Grundwerkstoff als Bindungsmatrix mit eingebetteten nichtoxidkeramischen Werkstoffen bestehen.

Nichtoxidkeramischen Werkstoff können beispielsweise Carbide oder Oxyde oder Nitride oder Nitide der Basiswerkstoffe Wolfram, Aluminium, Silizium, Zirkon oder Bor sein oder eine Mischung derselben darstellen.

In besonders vorteilhafter Weise kann der Überzug 11 dabei mittels einem thermischen Spritzverfahren aufgetragen werden, wobei der Überzug 11 beispielsweise aus einer Bindungsmatrix mit beinhaltenden Wolframcarbiden bestehen kann. Die Bindungsmatrix kann dabei überwiegend aus einer Nickellegierung bestehen.

Von besonderem Vorteil dabei ist, dass nach dieser Beschichtungstechnologie der Aufbringung metallischer Überzüge 11, beispielsweise mit eingebetteten nichtoxidkeramischen Werkstoffen, ein hoher abrasiver Widerstand auf den verschleißgefährdeten Flächen erzeugt werden kann.

Insbesondere werden dabei die Nachteile von technologischen oder realen Kerben durch die, mit dieser Verfahrenstechnik einhergehenden Vorteile einer dünnen, gleichmäßigen und homogenen Schichtdicke des Überzugs 11 bei gleichzeitig geschlossener Oberfläche mit konstanter Struktur, vermieden.

Diese Überzüge können dabei gezielt partiell eingeschränkt auf die Bereiche aufgetragen werden, die einer besonders hohen abrasiven Beanspruchung ausgesetzt sind, so dass dadurch die Duktilität einer Mähscheibe in keiner Weise unnötig beeinträchtigt ist.

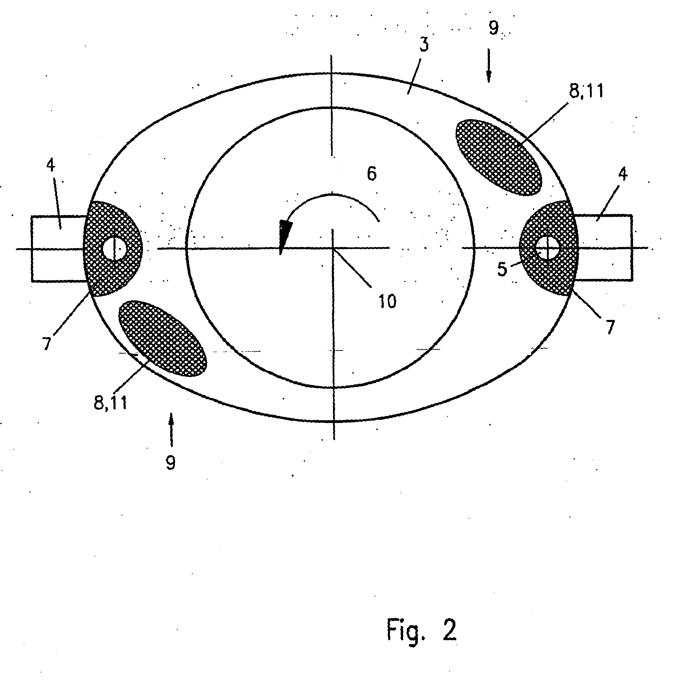

In dem Ausführungsbeispiel gemäß Fig. 2 beschränkt sich der Bereich des Überzugs 11 auf die in Bezug auf die Drehrichtung 6 der Mähscheibe 3 vorgelagerten Luv-Bereiche 9, so dass dadurch unnötige Wärmeeinträge während des Aufbringens der Beschichtung als Überzug im Lee-Bereich vermieden werden können.

## Patentansprüche

1. Mähscheibe (3) für Scheibenmähwerke (1) zum Mähen von stängeligem und/oder blättrigem Erntegut, dessen Mähscheiben (3) mit Mähklingen (4) bestückbar sind und von Bolzen (5) einer Messerhalterung gehalten werden können, **dadurch gekennzeichnet, dass** zumindest ein partieller Bereich (8) der Oberfläche einer Mähscheibe (3) einen Verschleiß mindernden Überzug (11) umfasst, der eine dünne und gleichmäßige Schichtdicke mit geschlossener Oberfläche und konstanter Struktur aufweist und der eine metallische Bindungsmatrix mit eingebundenen verschlußmindernden Werkstoffanteilen umfasst.

## Claims

1. A mowing disc (3) for disc mowing mechanisms (1) for mowing stalked and/or leaved crop material, the mowing discs (3) of which can be fitted with mowing blades (4) and can be held by bolts (5) of a cutter holding arrangement, **characterised in that** at least one partial region (8) of the surface of a mowing disc (3) includes a wear-reducing coating (11) which is of a thin and uniform layer thickness with a closed surface and a constant structure and which comprises a metallic binding matrix with incorporated wear-reducing material fractions.

## Revendications

1. Disque de coupe (3) pour mécanismes de coupe à disques (1) pour couper du produit à récolter en tiges et/ou en feuilles, dont les disques de coupe (3) peuvent être garnis de lames de coupe (4) maintenues par des goujons (5) d'un porte-lames, **caractérisé en ce qu'**au moins une zone partielle (8) de la surface d'un disque de coupe (3) comporte un revêtement (11) qui réduit l'usure et qui présente une épaisseur de couche mince et uniforme avec une surface fermée et une structure constante et qui comporte une matrice métallique de liaison avec l'inclusion de fractions de matière réductrice d'usure.
